# EUROPÄISCHE PATENTSCHRIFT

(11) **EP 2 012 403 B1**
(45) Veröffentlichungstag und Bekanntmachung des Hinweises auf die Patenterteilung: **31.07.2013**
(21) Anmeldenummer: 08104400.0
(22) Anmeldetag: 13.06.2008
(51) Int. Cl.: H02H 3/33

(54) **Fehlerstromschutzschalter und Verfahren zum Bauen eines Fehlerstromschutzschalters**
Residual current protection switch and method for constructing same
Disjoncteur à courant résiduel et procédé de construction d'un disjoncteur à courant résiduel

(30) Priorität: 04.07.2007 DE 102007030996
(43) Veröffentlichungstag der Anmeldung: 07.01.2009
(73) Patentinhaber: Siemens Aktiengesellschaft, 80333 München (DE)
(72) Erfinder: Martel, Jean-Mary, 93053, Regensburg (DE); Huber, Hans-Jürgen, 93047, Regensburg (DE); Sporrer, Thomas, 95478, Kemnath (DE)

(56) Entgegenhaltungen:
- EP-A2- 0 933 857
- GB-A- 2 244 398
- US-A- 5 177 657

## Beschreibung

Die Erfindung betrifft einen Fehlerstromschutzschalter nach dem Oberbegriff von Patentanspruch 1. Sie betrifft auch ein Verfahren zum Bauen eines Fehlerstromschutzschalters.

Ein Fehlerstromschutzschalter soll den Stromfluss in einem Leitungssystem bei einem Fehlerstrom unterbrechen. Dies ist dann der Fall, wenn der insgesamt zugeführte Strom ungleich dem insgesamt abgeführten Strom ist, d.h. wenn von dem zugeführten Strom ein Teil irgendwo abfließt. Der insgesamt zugeführte Strom ist der Gesamtstrom in allen Zufuhrleitungen, von denen es zumindest eine gibt, und der insgesamt abgeführte Strom ist der Gesamtstrom in den Abfuhrleitungen, von denen es auch zumindest eine gibt. Es geht vorliegend um einen Fehlerstromschutzschalter mit einem Summenstromwandler. Letzteres ist nichts anderes als ein Transformator. An dessen Primärseite wird der zugeführte und abgeführte Strom so geführt, dass sich die durch diesen Strom erzeugten Magnetfelder genau dann ausgleichen, wenn es keinen Fehlerstrom gibt. Beim Auftreten eines Fehlerstroms wird ein Magnetfeld erzeugt, durch das an einer Sekundärseite des Summenstromwandlers eine von Null verschiedene Spannung erzeugt wird. Diese Spannung wird einem Verstärker zugeführt, der sie verstärkt. Die verstärkte Spannung wird üblicherweise direkt einem Komparator zugeführt. Dieser vergleicht die verstärkte Spannung mit einer Bezugsspannung. Überschreitet die verstärkte Spannung die Bezugsspannung, wird dies als Anzeichen dafür gewertet, dass der Fehlerstrom zu groß ist, und der Komparator wechselt sein Ausgangssignal von logisch tief zu logisch hoch. Dem Komparator ist eine Auslöseschaltung nachgeordnet, die das Ausgangssignal des Komparators empfängt. Das Ausgangssignal des Komparators bewirkt in der Auslöseschaltung üblicherweise das Fließen eines Stromes, wodurch ein Auslöseelement, welches in der Regel als Spule verwirklicht ist, mit Strom beaufschlagt wird und einen Schalter betätigt, durch den der Stromfluss in dem Leitungssystem unterbrochen wird. Die Fehlerstromschutzschalter sind an sich für das Auslösen im Falle ausgebildet, dass der Fehlerstrom ein Wechselstrom ist. Fehlerströme können jedoch auch gepulst sein und weisen dann einen Gleichstromanteil auf. Durch den Gleichstromanteil im Fehlerstrom können Schäden auftreten. Den Hauptbeitrag zur Spannung an der Sekundärseite des Summenstromwandlers trägt jedoch der Wechselstromanteil. Daher kann es sein, dass der Fehlerstrom in seinem Gefahrenpotential bei üblichen Schaltungen unterschätzt wird. Es muss daher von der üblichen Schaltung abgewichen werden, will man den Fehlerstromschutzschalter so auslegen, dass er auch bei gepulstem Fehlerstrom auslöst. Aus diesem Grunde unterscheidet man zwischen Fehlerstromschutzschaltern, die lediglich bei Wechselstrom auslösen (als Fehlerstromschutzschalter vom AC-Typ bezeichnet) und Fehlerstromschutzschaltern die auch bei einem Gleichstromanteil auslösen (als Fehlerstromschutzschalter vom A-Typ bezeichnet).

Bei dem Fehlerstromschutzschalter vom AC-Typ gibt es Standardbauelemente, die preiswert sind. Insbesondere wurden integrierte Schaltkreise (integrated circuits IC) speziell für Fehlerstromschutzschalter vom AC-Typ entworfen. Ein Beispiel für einen solchen integrierten Schaltkreis ist der M54123 von Mitsubishi. Dieser integrierte Schaltkreis kam bei bisherigen Fehlerstromschutzschaltern vom A-Typ nicht zum Einsatz. Anstatt integrierte Schaltkreise zu verwenden, die für Fehlerstromschutzschalter vom AC-Typ gedacht worden sind, hat man bei Fehlerstromschutzschaltern vom A-Typ bisher die entsprechenden Schaltungen auf herkömmliche Weise, z.B. mit Operationsverstärkern aufgebaut, oder man hat speziell für Fehlerstromschutzschalter vom A-Typ Anwendungsspezifische integrierte Schaltkreise (application specific integrated circuits, ASICs)entworfen, die aber relativ teuer sind.

Die WO 91/19340 offenbart einen Fehlerstromschutzschalter, in welchem eine Schaltung wie im Oberbegriff von Patentanspruch 1 beschrieben eingesetzt ist.

Aus der EP 0 933 857 A2 ist ein elektrisches Fehlerstromschutzschaltgerät mit einem Summenstromwandler bekannt. Dabei sind ein Verstärker, der die an der Sekundärseite des Summenstromwandlers erzeugte Spannung verstärkt, und ein Komparator, der die ihm zugeführte Spannung mit einer Bezugsspannung vergleicht, gemeinsam auf einem integrierten Schaltkreis angeordnet.

Es ist Aufgabe der Erfindung, einen Weg aufzuzeigen, wie leichter vorhandene Bauelemente, insbesondere die oben genannten integrierten Schaltkreise, die eigentlich für Fehlerstromschutzschalter vom AC-Typ gedacht sind, auch bei Fehlerstromschutzschaltern vom A-Typ verwendet werden können.

Die Aufgabe wird durch einen Fehlerstromschutzschalter mit den Merkmalen gemäß Patentanspruch 1 und ein Verfahren zum Bauen eines Fehlerstromschutzschalters mit den Merkmalen gemäß Patentanspruch 2 gelöst.

Der Fehlerstromschutzschalter nach dem Oberbegriff nach Patentanspruch 1 zeichnet sich dadurch aus, dass der Ausgang des Verstärkers über eine Gleichrichterdiode mit einem Eingang des Komparators gekoppelt wird. Zudem wird der Eingang des Komparators gleichzeitig sowohl über ein kapazitives Element als auch über ein zu dem kapazitiven Element paralleles Widerstandselement mit Masse gekoppelt. Dies bedeutet nichts anderes, als dass der Ausgang des Verstärkers integriert wird, wobei durch das parallele Widerstandselement gewährleistet wird, dass das aufintegrierte Signal wieder abgebaut wird, sodass nicht unendlich lange integriert wird.

Durch das Integrieren des Verstärkerausgangs werden diejenigen Anteile in der Spannung auf der Sekundärseite des Summenstromwandlers stärker gewichtet, die auf einen Gleichstromanteil im Fehlerstrom zurückgehen. Dadurch ist es möglich, bei unveränderter Bezugsspannung im Übrigen den Grundaufbau eines Fehlerstromschutzschalters vom AC-Typ, einem Fehlerstromschutzschalter vom A-Typ zu verwenden.

Erfindungsgemäß geschieht dies dergestalt, dass auch ein integrierter Schaltkreis verwendet wird, der ursprünglich für Fehlerstromschutzschalter vom AC-Typ gedacht ist, zum Beispiel der integrierte Schaltkreis M54123 von Mitsubishi. Dies bedeutet, dass Verstärker und Komparator gemeinsam auf einem integrierten Schaltkreis angeordnet sind. Dieser integrierte Schaltkreis weist Anschlussmöglichkeiten auf, damit die oben genannte Integratorschaltung verwirklicht werden kann. Es sind kapazitive Elemente und Widerstandselemente an den integrierten Schaltkreis angeschlossen. Zu dem integrierten Schaltkreis kann auch eine Einheit gehören, die dem Komparator die Bezugsspannung zuführt.

Die Leistungsfähigkeit des Fehlerstromschutzschalters der erfindungsgemäßen Art wird dadurch weiter gesteigert, dass eine Resonanzüberhöhung bestimmter Anteile des an der Sekundärseite des Stromwandlers erzeugten Spannungssignals bewirkt wird, indem die Anschlüsse der Sekundärseite des Summenstromwandlers über ein kapazitives Element miteinander gekoppelt werden. Zusammen mit der Induktivität der Sekundärseite des Summenstromwandlers ergibt sich ein LC-Resonanzkreis. Bei einer Netzspannung von 50 Hz hat dieser beispielsweise eine Resonanzfrequenz von zwischen 70 und 90 Hz, zum Beispiel von 80 Hz. Dadurch werden Anteile in der Spannung überhöht, die nicht auf den Wechselspannungsanteil des Fehlerstroms von 50 Hz zurückgehen, sondern auf Gleichspannungsanteile. Die Gleichspannungsanteile können auch anhand von Harmonischen der Netzfrequenz erfasst werden. Der vorgenannte Wertebereich für die Resonanzfrequenz erstreckt sich vom 1,5 - 1,8-fachen der Netzfrequenz.

Das erfindungsgemäße Verfahren zum Bauen eines Fehlerstromschutzschalters zum Unterbrechen des Stromflusses in einem Leitungssystem aus zumindest einer Zufuhrleitung und zumindest einer Abfuhrleitung erfasst erfindungsgemäß folgende Schritte:
- Bereitstellen eines Summenstromwandlers mit primärseitigen Anschlüssen zum Anschließen sämtlicher Zufuhrleitungen und Abfuhrleitungen und mit zwei sekundärseitigen Anschlüssen,
- Bereitstellen eines integrierten Schaltkreises mit einem Spannungsverstärker und einem Komparator, bei dem zwei Eingänge und zumindest ein Ausgang des Spannungsverstärkers und ein Eingang und der Ausgang des Komparators anschließbar sind,
- Koppeln der sekundärseitigen Anschlüsse des Summenstromwandlers mit den Eingängen des Spannungsverstärkers,
- Koppeln des Ausgangs des Spannungsverstärkers über eine Gleichrichterdiode mit dem Eingang des Komparators und Koppeln des Eingangs des Komparators über ein kapazitives Element und parallel hierzu über ein Widerstandselement mit Masse,
- Bereitstellen und Verschalten eines Auslöseelements zum Unterbrechen des Stromflusses und einer Auslöseschaltung für das Auslöseelement,
- Koppeln der Auslöseschaltung mit dem Ausgang des Komparators.

Das erfindungsgemäße Verfahren zeichnet sich dadurch aus, dass zumindest funktional praktisch die selben Bauteile verwendet werden wie bei einem Fehlerstromschutzschalter nach dem AC-Typ, auch wenn durch das Koppeln des Ausgangs des Spannungsverstärkers über eine Gleichrichterdiode mit den Eingängen des Komparators und das Koppeln des Eingangs des Komparators über das Widerstandselement mit Masse eine spezifische Anpassung dahingehend erfolgt, dass der Fehlerstromschutzschalter als Fehlerstromschutzschalter vom A-Typ einsetzbar ist.

Auch bei dem Verfahren zum Bauen eines Fehlerstromschutzschalters ist eine Resonanzüberhöhung des Ausgangssignals des Summenstromwandlers vorgesehen, indem die sekundärseitigen Anschlüsse des Summenstromwandlers über ein kapazitives Element miteinander gekoppelt werden.

Nachfolgend wird eine bevorzugte Ausführungsform der Erfindung unter Bezug auf die Zeichnung beschrieben, in der
- Fig. 1: schematisch den Aufbau eines Fehlerstromschutzschalters vom AC-Typ veranschaulicht,
- Fig. 2: den Aufbau eines erfindungsgemäßen Fehlerstromschutzschalters (vom A-Typ) veranschaulicht,
- Fig. 3: den Aufbau aus Fig. 2 teilweise im Detail wiedergibt.

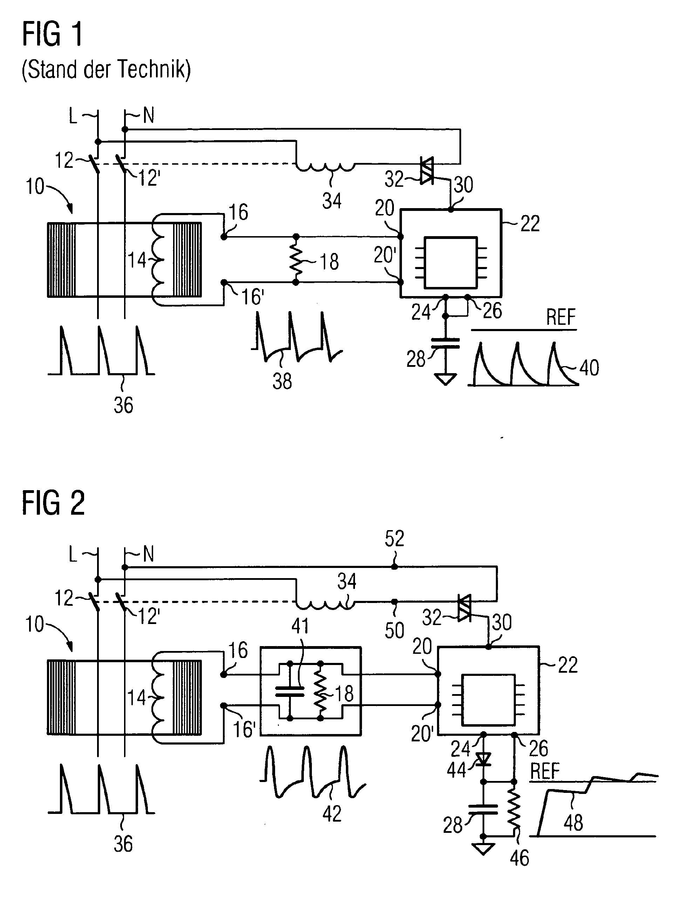

Fig. 1 veranschaulicht den Aufbau eines Fehlerstromschutzschalters vom AC-Typ, d.h. eines Fehlerstromschutzschalters, der zum Erfassen von Fehlerströmen ausgelegt ist, die keinen oder einen nur geringen Gleichstromanteil haben.

Vorliegend gibt es eine Stromzufuhrleitung L und eine Stromabfuhrleitung N (Masseleitung). Sämtliche in Fig. 1 gezeigten Elemente gehören zum Fehlerstromschutzschalter. Insbesondere gehören ein Leitungsabschnitt der Leitung L und ein Leitungsabschnitt der Leitung N jeweils zum Fehlerstromschutzschalter. Diese Leitungsabschnitte umfassen einen Teil, der an der Primärseite eines Summenstromwandlers 10 verläuft, und einen Teil, in dem Schalter 12, 12' ausgebildet sind, die geöffnet werden, wenn ein Fehlerstrom auftritt, der als zu groß erfasst wird.

An einer Sekundärseite des Summenstromwandlers 10 gibt es ein induktives Element 14 mit zwei Anschlüssen 16 und 16', die über ein Widerstandselement 18 miteinander gekoppelt sind. Der Summenstromwandler trägt seinen Namen, weil die Summe des Stroms in der Leitung L einerseits und der Leitung N andererseits sekundärseitig eine Spannung induziert. In Abwesenheit eines Fehlerstroms ist diese Summe gleich Null, und es wird keine Spannung erzeugt. Beim Auftreten eines Fehlerstroms fließt Strom zwar über die Leitung L zu, aber weniger Strom fließt über die Leitung N ab, sodass die Summe des Stroms einen endlichen Betrag hat und sekundärseitig eine Spannung zwischen den Anschlüssen 16 und 16' erzeugt wird. Diese Spannung wird Eingängen 20 20' eines integrierten Schaltkreises 22 zugeführt. Vorliegend soll es sich insbesondere um den integrierten Schaltkreis M54123 von Mitsubishi handeln. In dem integrierten Schaltkreis 22 gibt es einen Verstärker, und die Anschlüsse 20 und 20' sind dessen Eingangsanschlüsse. Der Ausgang des Verstärkers 24 ist als Anschluss 24 bereitgestellt. Es gibt in dem integrierten Schaltkreis 22 einen Komparator, und dessen einer Eingang ist als Anschluss 26 bereitgestellt. Im Stand der Technik werden die Anschlüsse 24 und 26 direkt miteinander verbunden, d.h. der Ausgang des Verstärkers wird mit dem Eingang des Komparators gekoppelt. Der Eingang des Komparators 26 wird auf jeden Fall über einen Kondensator 28 mit Masse gekoppelt. Der Kondensator 28 bewirkt eine Zeitverzögerung bis zum Eingehen des Signals beim Komparator. Durch geeignete Wahl der Kapazität des Kondensators 28 kann die Zeitverzögerung eingestellt werden.

Der Ausgang des Komparators in dem integrierten Schaltkreis 22 steht ebenfalls als Anschluss zur Verfügung, nämlich als Anschluss 30. Dieser ist mit einer Auslöseschaltung 32 gekoppelt, die zumindest einen Thyristor umfasst. Überschreitet die Spannung am Eingang 26 des Komparators eine Bezugsspannung, so wird der Ausgang 30 logisch hochgesetzt, und der Thyristor 32 schaltet durch. Da der Thyristor 32 in einer Verbindung zwischen den beiden Leitungen L und N geschaltet ist, in der zusätzliche eine Auslösespule 34 geschaltet ist, fließt bei ausreichend hohem Fehlerstrom somit ein Strom, und dieser reicht aus, dass die Auslösespule 34 ein in Fig. 1 nicht gezeigtes Element betätigt, das das Öffnen der Schalter 12 und 12' mechanisch bewirkt.

Wie oben erwähnt, ist der Fehlerstromschutzschalter mit den Elementen aus Fig. 1 insbesondere dann funktionsfähig, wenn der Fehlerstrom ein Wechselstrom ist. Der Fehlerstrom kann jedoch auch gepulst sein. Fig. 1 zeigt als Beispiel für einen solchen Fehlerstrom eine Folge 36 von Strompulsen. Eine solche Strompulsfolge 36 bewirkt sekundärseitig zwischen den Anschlüssen 16 und 16' (bzw. 20 und 20') eine Folge 38 von Spannungspulsen. Bei der Schaltung gemäß Fig. 1 hat diese eine Folge 40 von Spannungspulsen am Eingang 26 des Komparators zur Folge. Wie Fig. 1 zu entnehmen, erreichen die Spannungspulse 40 zu keinem Zeitpunkt die Höhe der Bezugsspannung REF. Dies bedeutet, dass der Komparator nicht logisch hochschaltet, der Thyristor 32 somit nicht durchgeschaltet wird und die Schalter 12 und 12' nicht betätigt werden. Es wäre aber wünschenswert, würden die Schalter 12 und 12' betätigt, denn die Strompulse in der Pulsfolge 36 sind relativ hoch und können schädlich sein.

Gemäß einem Ausführungsbeispiel wird nun die Anordnung aus Fig. 1 an zwei Stellen abgewandelt, sodass die Schalter 12 und 12' auch bei einer Pulsfolge nach Art der Pulsfolge 36 geöffnet werden.

Zum einen tritt zu dem Widerstand 18 noch ein Kondensator 41 hinzu, der die Anschlüsse 16 und 16' miteinander verbindet. Das induktive Element 14 bildet zusammen mit dem Kondensator 41 einen LC-Resonanzkreis, sodass die Pulse besonders verstärkt werden, wenn die Resonanzfrequenz geeignet gewählt ist, zum Beispiel 80 Hz bei einer Netzfrequenz von 50 Hz beträgt (das 1,6-fache der Netzfrequenz).

Man erhält dann anstelle der Pulsfolge 38 eine Pulsfolge 42, wobei zu beachten ist, dass die Pulse bei der Pulsfolge 42 regelmäßig höher sein werden als die Pulse der Pulsfolge 38. Zudem ist die Pulsfolge 42 im Vergleich zur Pulsfolge 38 auch geglättet.

Dem Verstärker in dem integrierten Schaltkreis 22 werden somit ganz andere Signale zugeführt als beim Stand der Technik gemäß Fig. 1. Es wird nun der Ausgang 24 des Verstärkers nicht mehr direkt mit dem Eingang 26 des Komparators gekoppelt. Vielmehr wird als Gleichrichteelement eine Diode 44 zwischengeschaltet. Parallel zu dem Kondensator 28 wird ein Widerstand 46 geschaltet. Die Diode 44 bewirkt, dass das Ausgangssignal des Verstärkers 24 gleichgerichtet wird, was zusammen mit dem Kondensator 28 zum Aufintegrieren des Signals führt. Der Widerstand 46 bewirkt einen langsamen Abfall des Signals, damit nicht über zu lange Zeitdauern ausschließlich aufintegriert wird.

Am Eingang 26 bewirkt nun die Pulsfolge 42 einen Verlauf der Spannung entsprechend der Kurve 48. Die Spannung erreicht zwar beim ersten Puls der Pulsfolge 42 immer noch nicht die Referenzspannung REF, fällt dann aber wegen der gleichrichtenden Wirkung der Diode 44 kaum ab, wobei die Stärke des Abfalls durch den Widerstand 46 bestimmt ist. Der zweite Puls der Pulsfolge 42 bewirkt dann bereits, dass die Spannung in der Kurve 48 die Referenzspannung REF überschreitet, und ein dritter Puls bewirkt ein deutliches Überschreiten der Referenzspannung REF. Dadurch ist gewährleistet, dass der Komparator am Ausgang 30 irgendwann rechtzeitig logisch hochschaltet, den Thyristor 32 kurzschließt, sodass die Auslösespule 34 bestromt wird und die Schalter 12 und 12' geöffnet werden.

Die Anordnung aus Fig. 2 macht Gebrauch von dem integrierten Schaltkreis M54123 von Mitsubishi. Durch geeignete Verschaltung außerhalb des integrierten Schaltkreises wird der Fehlerstromschutzschalter zum Fehlerstromschutzschalter vom A-Typ, d.h. er löst auch bei pulsförmigem Fehlerstrom zuverlässig aus.

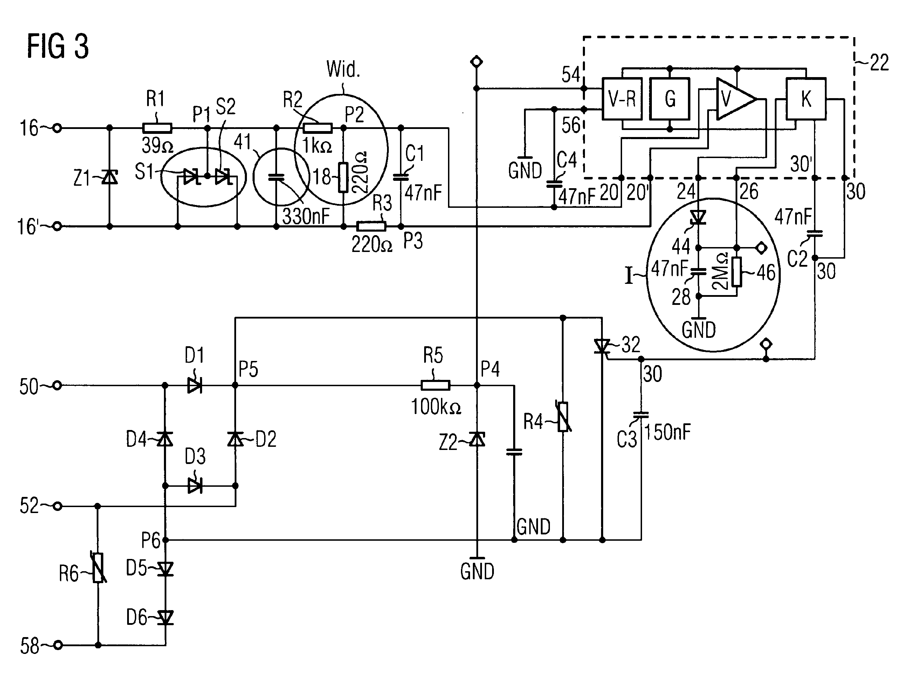

Fig. 3 zeigt die Anordnung aus Fig. 2 nochmals im Detail: Während Fig. 2 die Bauelemente eher schematisch veranschaulicht, zeigt Fig. 3 die tatsächliche Schaltung.

Gezeigt ist der Teil der Anordnung aus Fig. 2, der mit den Anschlüssen 16 und 16' beginnt und mit Anschlüssen 50 zur Auslösespule 34 hin und 52 zur Masseleitung N endet. Die Anschlüsse 16 und 16' werden durch eine Zenerdiode Z1 überbrückt, die eine Sperrspannung von 3,3 V hat. Über einen Widerstand R1 von 39Ω ist der Anschluss 16 mit einem Punkt P1 gekoppelt. Der Anschluss 16' ist über eine erste Schottkydiode S1 mit dem Punkt P1 in Durchgangsrichtung und eine zweite Schottkydiode S2 mit dem Punkt P1 in Sperrrichtung gekoppelt. Diese begrenzen die Spannung am Kondensator 41 und damit die bei der Resonanz aufgebrachte Energie. Der Kondensator 41 hat eine Kapazität von 330 nF. Der Punkt P1 ist über einen Widerstand R2 von einem Kiloohm kΩ mit dem Punkt P2 gekoppelt, der über den Widerstand 18, der einen Wert von 220Ω hat, mit dem Anschluss 16' gekoppelt ist. Der Anschluss 16' ist über einen Widerstand R3 von 220Ω mit dem Punkt P3 gekoppelt, und die Punkte P2 und P3 sind über einen Kondensator C1 mit einer Kapazität von 47 nF miteinander gekoppelt. Die Punkte P2 und P3 sind direkt mit den Eingangsanschlüssen 20 und 20' des Verstärkers V in dem integrierten Schaltkreis 23 verbunden. Neben dem Verstärker V umfasst der integrierte Schaltkreis 22 einen Komparator K, einen Bezugsspannungsgenerator G und einen Spannungsregulator V-R. Intern ist der Komparator K mit dem Generator G verbunden. Der zweite Eingang des Komparators K wird außen an dem integrierten Schaltkreis 22 angeschlossen, dies ist nämlich der Eingang 26. Wie unter Bezug auf Fig. 2 beschrieben, ist dieser mit dem Ausgang 24 gekoppelt, wobei die Diode 44, der Kondensator 28 mit einer Kapazität von 47 nF und der Widerstand 46 mit einem Widerstandswert von 2 Megaohm mΩ in der in Fig. 2 beschriebenen Art geschaltet sind und den Integrator I bilden. Der Komparator K hat neben dem in Fig. 2 gezeigten einen Ausgang 30 noch einen zweiten Ausgang 30', wobei diese über einen Kondensator C2 mit einer Kapazität von 47 nF miteinander gekoppelt sind. Dies entspricht dem Schaltvorschlag des Herstellers Mitsubishi des integrierten Schaltkreises M54123.

Wie in Fig. 2 bereits gezeigt, ist der Punkt 30 direkt mit dem Thyristor 32 verbunden. Der Punkt 30 ist zudem über einen weiteren Kondensator C3 mit einer Kapazität 150 nF mit Masse verbunden. Parallel zu dem Thyristor 32 ist ein variabler Widerstand R4 geschaltet. Dem Anschluss 50 ist eine in Fig. 2 nicht gezeigte Brückenschaltung aus Dioden D1, D2, D3 und D4 nachgeordnet. Die Diode richtet die von der Leitung L - die ja über die Auslösespule 34 mit dem Anschluss 50 verbunden ist (vgl. Fig. 2) - kommende Spannung gleich, und ein weiterer Widerstand R5, der der Diode nachgeordnet ist und einen Widerstandswert von 100 kΩ hat, begrenzt den Strom. Der Anschluss 50 ist über die Diode D1 und den Widerstand R5 mit einem Punkt P4 verbunden, der über eine Zenerdiode Z2 mit Masse gekoppelt ist. Die Zenerdiode Z2 begrenzt die Spannung am Punkt P4 auf 12 V. Der Punkt P4 ist mit einem Eingang 54 des Spannungsregulators V-R verbunden, und ein zweiter Eingang 56 des Spannungsregulators V-R ist über einen Kondensator C4 mit einer Kapazität von 47 nF mit dem Punkt P2 gekoppelt. Gleichzeitig ist der Eingang 56 mit Masse gekoppelt. Der Thyristor 32 ist mit dem Punkt P5 zwischen Diode D1 und Widerstand R5 gekoppelt. Bei logisch tiefem Ausgang des Komparators K an Punkt 30 schaltet der Thyristor 32 nicht durch, und es fließt allenfalls ein geringer Strom vom Anschluss 50 über die Diode D1, den Widerstand R5 und die Zenerdiode Z2 zur Masse, der die Auslösespule 34 nicht auslöst. Wird nun entsprechend der Kurve 48 in Fig. 2 bei einem pulsförmigen Fehlerstrom die Bezugsspannung REF am Komparator K überschritten, schaltet der Komparator logisch hoch. Der Thyristor 32 schließt dann den Punkt P5 mit dem Punkt P6 kurz. Dies bedeutet, dass der Punkt P5 auf Masse liegt. Es entsteht ein Kurzschluss über die Diode D2 zum Anschluss 52, und es kann ein Strom vom Anschluss 50 zum Anschluss 52 fließen. Dies bedeutet, dass (vgl. Fig. 2) ein Strom von der Leitung L über die Auslösespule 34 zur Leitung N fließen kann, und dass die Schalter 12 und 12' durch die Auslösespule 34 dann geöffnet werden können.

Die Schaltung gemäß Fig. 3 umfasst noch einen weiteren Anschluss 58, der als Anschluss" funktionelle Erde" bezeichnet wird und für den Fall wichtig ist, dass vergessen wird, den Anschluss 52 mit der Leitung N zu verbinden. Die funktionelle Erde 58 koppelt die Schaltung beispielsweise mit dem Gehäuse und damit mit Masse. Der Anschluss 52 ist über einen variablen Widerstand R6 mit dem Anschluss 58 verbunden. Der Punkt P6 ist über zwei Dioden D5 und D6 mit dem Anschluss 58 verbunden. Gegebenenfalls fließt der Strom dann zur funktionellen Erde 58, wenn der Anschluss 52 nicht angeschlossen ist. Alternativ zur Verwendung des integrierten Schaltkreises M54123 von Mitsubishi als integrierter Schaltkreis 22 kann auch ein anderer integrierter Schaltkreis vorgesehen sein, der zumindest einen Verstärker, einen Komparator und geeignete Mittel zum Erzeugen einer Bezugsspannung aufweist, wenn die Anschlussmöglichkeiten dieses integrierten Schaltkreises wie in Fig. 2 und gegebenenfalls in Fig. 3 dargestellt ausgebildet sind: Es genügt, dass der Ausgang des Verstärkers über eine Diode mit dem Eingang des Komparators verbunden wird, und dass der Eingang des Komparators über einen Kondensator nach Art des Kondensators 28 und parallel hierzu über einen Widerstand nach Art des Widerstandes 46 mit Masse verbindbar ist.

### Bezugszeichenliste

- 10: Summenstromwandler
- 12,12': Schalter
- 14: induktives Element
- 16, 16': Anschlüsse
- 18: Widerstandselement
- 20,20': Eingänge
- 22: integrierter Schaltkreis
- 24: Anschluss
- 26: Kamparator
- 28: Kondensator
- 30,30': Anschluss
- 32: Thyristor
- 34: Auslösespule
- 36,38,4041: Pulsfolgen
- 44: Diode
- 46: Widerstand
- 48: Kurve
- 50,52: Anschlüsse
- 54,56: Eingang d. Spannungsregulators
- 58: funktionelle Erde
- C1,C2,C4: Kondensatoren
- D1,D2,D3,D4,D5,D6: Dioden
- G: Bezugsspannungsgenerator
- I: Integrator
- K: Komparator
- L: Stromzufuhrleitung
- N: Stromabfuhrleitung
- Pa,P2,P3,P4,P5,P6: Punkte
- R1,R2,R3,R4,R5: Widerstände
- REF: Referenzspannung
- S2: Schottkydiode
- V: Verstärker
- V-R: Spannungsregulator
- Z1,Z2: Zenerdioden

## Patentansprüche

1. Fehlerstromschutzschalter zum Unterbrechen des Stromflusses in einem Leitungssystem, wenn der Gesamtstrom in zumindest einer Zufuhrleitung des Leitungssystem ungleich dem Gesamtstrom in zumindest einer Abfuhrleitung des Leitungssystems ist, mit einem Summenstromwandler (10), wobei an einer Primärseite des Summenstromwandlers die zumindest eine Zufuhrleitung (L) und die zumindest eine Abfuhrleitung (N) so geschaltet sind, dass im Falle des Auftretens eines Fehlerstroms an einer Sekundärseite (16,16') des Summenstromwandlers (10) eine von Null verschiedene Spannung erzeugt wird, wobei der Fehlerstromschutzschalter ferner einen Verstärker (V) zum Verstärken der so erzeugten Spannung und einen Komparator (K) zum Vergleichen einer ihm zugeführten Spannung mit einer Bezugsspannung (REF) aufweist, und wobei der Fehlerstromschutzschalter weiterhin eine Auslöseschaltung (32) umfasst, die ein Ausgangssignal des Komparators (K) empfängt und ein Auslöseelement (34) zum Unterbrechen des Stromflusses in dem Leitungssystem ansteuert, wobei der Ausgang (24) des Verstärkers (V) über eine Gleichrichterdiode (44) mit dem einen Eingang (26) des Komparators (K) gekoppelt ist und wobei dieser Eingang (26) des Komparators sowohl über ein kapazitives Element (28), als auch über ein zu dem kapazitiven Element (28) paralleles Widerstandselement (46) mit Masse gekoppelt ist,
**dadurch gekennzeichnet, dass**
Verstärker (V) und Komparator (K) gemeinsam auf einem integrierten Schaltkreis (22) angeordnet sind, an dem das kapazitive Element (28) und das Widerstandselement (46) angeschlossen sind, und dass
zwei Anschlüsse (16,16') der Sekundärseite des Summenstromwandlers (10) über ein kapazitives Element (41) miteinander gekoppelt sind, mit dem sich zusammen mit einer Induktivität (14) der Sekundärseite des Summenstromwandlers (10) ein LC-Resonanzkreis ergibt, um eine Resonanzüberhöhung bestimmter Anteile des an der Sekundärseite erzeugten Spannungssignals zu bewirken.

2. Verfahren zum Bauen eines Fehlerstromschutzschalters zum Unterbrechen des Stromflusses in einem Leitungssystem aus zumindest einer Zufuhrleitung (L) und zumindest einer Abfuhrleitung (N), mit den Schritten:
- Bereitstellen eines Summenstromwandlers (10) mit primärseitigen Anschlüssen zum Anschließen sämtlicher Zufuhrleitungen (L) und Abfuhrleitungen (N) und mit zwei sekundärseitigen Anschlüssen (16,16'),
- Bereitstellen eines integrierten Schaltkreises (22) mit einem Spannungsverstärker (V) und einem Komparator (K), bei dem zwei Eingänge (20,20') und der Ausgang (24) des Spannungsverstärkers und ein Eingang (26) und ein Ausgang (30) des Komparators (K) anschließbar sind,
- Koppeln der sekundärseitigen Anschlüsse (16,16') des Summenstromwandlers (10) mit den Eingängen (20,20') des Spannungsverstärkers (V),
- Koppeln des Ausgangs (24) des Spannungsverstärkers (V) über eine Gleichrichterdiode (44) mit dem Eingang (46) des Komparators (K) und Koppeln des Eingangs (26) des Komparators (K) über ein kapazitives Element (28) und parallel hierzu über ein Widerstandselement (46) mit Masse,
- Bereitstellen und Verschalten eines Auslöseelements (32,12,12') zum Unterbrechen des Stromflusses und einer Auslöseschaltung für das Auslöseelement (32),
- Koppeln der Auslöseschaltung (32) mit dem Ausgang (30)des Komparators (K),
**dadurch gekennzeichnet, dass**
zusätzlich die sekundärseitigen Anschlüsse (16,16') des Summenstromwandlers (10) über ein kapazitives Element (41) miteinander gekoppelt werden, mit dem sich zusammen mit einer Induktivität (14) der Sekundärseite des Summenstromwandlers (10) ein LC-Resonanzkreis ergibt, um eine Resonanzüberhöhung bestimmter Anteile des an der Sekundär seite erzeugten Spannungssignals zu bewirken.

## Claims

1. Residual current protection switch for interrupting the flow of current in a line system if the total current in at least one infeed line of the line system is not equal to the total current in at least one outfeed line of the line system, said residual current protection switch comprising a summation current transformer (10), with the at least one infeed line (L) and the at least one outfeed line (N) being connected on a primary side of the summation current transformer in such a way that if a residual current occurs on a secondary side (16,16') of the summation current transformer (10) a non-zero voltage will be generated, with the residual current protection switch further having an amplifier (V) for amplifying the voltage thus generated and a comparator (K) for comparing a voltage supplied to it with a reference voltage (REF), and with the residual current protection switch additionally comprising a tripping circuit (32) which receives an output signal of the comparator (K) and actuates a tripping element (34) for interrupting the current flow in the line system, with the output (24) of the amplifier (V) being coupled to one input (26) of the comparator (K) via a rectifier diode (44) and with said input (26) of the comparator being coupled to earth both via a capacitive element (28) and via a resistive element (46) in parallel with the capacitive element (28),
**characterised in that**
amplifier (V) and comparator (K) are arranged jointly on an integrated circuit (22) to which the capacitive element (28) and the resistance element (46) are connected, and **in that** two terminals (16,16') of the secondary side of the summation current transformer (10) are coupled to each other via a capacitive element (41) by means of which, in combination with an inductive element (14) of the secondary side of the summation current transformer (10), an LC resonant circuit is produced in order to effect a resonant magnification of specific components of the voltage signal generated on the secondary side.

2. Method for constructing a residual current protection switch for interrupting the flow of current in a line system consisting of at least one infeed line (L) and at least one outfeed line (N), said method comprising the steps of:
- providing a summation current transformer (10) having primary-side terminals for connecting all of the infeed lines (L) and outfeed lines (N) and having two secondary-side terminals (16,16'),
- providing an integrated circuit (22) having a voltage amplifier (V) and a comparator (K) in which two inputs (20,20') and the output (24) of the voltage amplifier and an input (26) and an output (30) of the comparator (K) can be connected,
- coupling the secondary-side terminals (16,16') of the summation current transformer (10) to the inputs (20,20') of the voltage amplifier (V),
- coupling the output (24) of the voltage amplifier (V) to the input (46) of the comparator (K) via a rectifier diode (44) and coupling the input (26) of the comparator (K) to earth via a capacitive element (28) and in parallel herewith via a resistance element (46),
- providing and interconnecting a tripping element (32,12,12') for interrupting the current flow and a tripping circuit for the tripping element (32), and
- coupling the tripping circuit (32) to the output (30) of the comparator (K),
**characterised in that**
in addition the secondary-side terminals (16,16') of the summation current transformer (10) are coupled to each other via a capacitive element (41) by means of which, in combination with an inductive element (14) of the secondary side of the summation current transformer (10), an LC resonant circuit is produced in order to effect a resonant magnification of specific components of the voltage signal generated on the secondary side.

## Revendications

1. Disjoncteur à courant résiduel servant à interrompre le flux de courant dans un système de conducteurs lorsque le courant total dans au moins un conducteur d'entrée du système est différent du courant total dans au moins un conducteur de sortie du système, comprenant un transformateur de courant sommateur (10), ledit au moins un conducteur d'entrée (L) et ledit au moins un conducteur de sortie (N) étant montés sur un côté primaire du transformateur de courant sommateur de façon à générer une tension différente de zéro en cas de survenue d'un courant de fuite sur un côté secondaire (16, 16') du transformateur de courant sommateur (10), le disjoncteur à courant résiduel comprenant en outre un amplificateur (V) pour amplifier la tension ainsi générée et un comparateur (K) pour comparer une tension amenée à une tension de référence (REF), et le disjoncteur à courant résiduel comprenant également un circuit de déclenchement (32) qui reçoit un signal de sortie du comparateur (K) et qui commande un déclencheur (34) pour interrompre le flux de courant dans le système de conducteurs, la sortie (24) de l'amplificateur (V) étant couplée à une entrée (26) du comparateur (K) via une diode de redressement (44), et cette entrée (26) du comparateur étant couplée à la masse à la fois via un élément capacitif (28) que via un élément résistif (46) connecté en parallèle à l'élément capacitif (28),
**caractérisé en ce que**
l'amplificateur (V) et le comparateur (K) sont montés ensemble sur un circuit intégré (22) auquel sont connectés l'élément capacitif (28) et l'élément résistif (46), et **en ce que** deux bornes (16, 16') du côté secondaire du transformateur de courant sommateur (10) sont couplées entre elles via un élément capacitif (41) lequel forme, conjointement avec une inductance (14) du côté secondaire du transformateur de courant sommateur (10), un circuit de résonance LC afin de provoquer une amplification de résonance de certaines parties du signal de tension généré sur le côté secondaire.

2. Procédé de construction d'un disjoncteur à courant résiduel servant à interrompre le flux de courant dans un système de conducteurs formé d'au moins un conducteur d'entrée (L) et d'au moins un conducteur de sortie (N), comprenant les étapes consistant à :
- fournir un transformateur de courant sommateur (10) avec des bornes du côté primaire pour connecter l'ensemble des conducteurs d'entrée (L) et des conducteurs de sortie (N) et avec deux bornes (16, 16') du côté secondaire,
- fournir un circuit intégré (22) comprenant un amplificateur de tension (V) et un comparateur (K), où deux entrées (20, 20') et la sortie (24) de l'amplificateur de tension (V) ainsi qu'une entrée (26) et une sortie (30) du comparateur (K) sont connectables,
- coupler les bornes (16, 16') du côté secondaire du transformateur de courant sommateur (10) aux entrées 20, 20') de l'amplificateur de tension (V),
- coupler la sortie (24) de l'amplificateur de tension (V) à l'entrée (26) du comparateur (K) via une diode de redressement (44) et coupler l'entrée (26) du comparateur (K) à la masse via un élément capacitif (28) et en parallèle à celui-ci via un élément résistif (46),
- fournir et connecter un déclencheur (32, 12, 12') pour interrompre le flux de courant et un circuit de déclenchement pour le déclencheur (32),
- coupler le circuit de déclenchement (32) à la sortie (30) du comparateur (K),
**caractérisé en ce que**
additionnellement, les deux bornes (16, 16') sur le côté secondaire du transformateur de courant sommateur (10) sont couplées entre elles via un élément capacitif (41) lequel forme, conjointement avec une inductance (14) du côté secondaire du transformateur de courant sommateur (10), un circuit de résonance LC afin de provoquer une amplification de résonance de certaines parties du signal de tension généré sur le côté secondaire.
